# EUROPÄISCHE PATENTSCHRIFT

(11) **EP 3 484 024 B1**
(45) Veröffentlichungstag und Bekanntmachung des Hinweises auf die Patenterteilung: **04.01.2023**
(21) Anmeldenummer: 18205233.2
(22) Anmeldetag: 08.11.2018
(51) Int. Cl.: H02K 1/279, H02K 7/11, H02K 21/22, H02K 49/10, H02K 7/06, H02K 41/03

(54) **AKTUATOR**
ACTUATOR
ACTIONNEUR

(30) Priorität: 08.11.2017 DE 102017126147
(43) Veröffentlichungstag der Anmeldung: 15.05.2019
(73) Patentinhaber: SCHUNK Electronic Solutions GmbH, 78112 St. Georgen (DE)
(72) Erfinder: Ruggieri, Patrick, 78647 Trossingen (DE)
(74) Vertreter: DREISS Patentanwälte PartG mbB

(56) Entgegenhaltungen:
- CN-A- 105 186 832
- GB-A- 945 225
- GB-A- 2 512 074

## Beschreibung

Die Erfindung betrifft einen Aktuator mit einem Primärteil, mit einem das Primärteil in radialer Richtung umgebenden und um eine Drehachse drehbar angeordneten Rotor und mit einem den Rotor in radialer Richtung umgebenden Hohlkörper, wobei der Rotor und der Hohlkörper derart magnetisch miteinander gekoppelt sind, dass sich der Rotor bei Drehung entlang einer um die Drehachse verlaufenden Helix bewegt. Der Rotor ist dabei mit einem Stellglied derart bewegungsgekoppelt, dass bei Drehung des Rotors entlang der Helix das Stellglied translatorisch verfahren wird. Das Primärteil weist dazu insbesondere bestrombare Wicklungen auf, die derart sind, dass bei Bestromung der Wicklungen der Rotor rotatorisch entlang der Helix bewegt wird.

Ein Aktuator mit Merkmalen des Oberbegriffs des Patentanspruchs 1 ist aus der WO 2014/147155 A1 bekannt. Derartige Aktuatoren haben den Vorteil, dass sie ein vergleichsweises großes Übersetzungsverhältnis haben, welches letztlich von der Steigung der Helix abhängt. Aufgrund der magnetischen Kopplung des Rotors mit dem Hohlkörper tritt kein mechanischer Verschleiß auf. Dennoch kann der Rotor sicher entlang der Helix bewegt werden. Bei dem in der WO 2014/147155 A1 gezeigten Aktuator ist der Rotor als Hülse ausgebildet, der in radialer Richtung verlaufende Bohrungen aufweist, wobei diese Bohrungen entlang der Helix angeordnet sind. In den Bohrungen sind dann verschiedenartig polarisierte Magnete eingesetzt. Der Hohlkörper ist dort entsprechend ausgebildet; er weist Radialbohrungen auf, in denen einzelne Magnete eingesetzt sind.

Aus der CN 105 186 832 A ist eine Magnetschraube mit einer Magnetmutter bekannt. Die Magnetschraube umfasst eine magnetische Schraubenstange, die aus einem Schrauben-Schrauben-Eisenring und einer Vielzahl von ersten Kreisbogen-Dauermagneten 4-1 besteht.

Es hat sich herausgestellt, dass die Herstellung eines solchen Rotors und eines zugehörigen Hohlkörpers aufgrund der großen Anzahl der daran anzuordnenden Magnete sehr aufwändig ist.

Der vorliegenden Erfindung liegt deshalb die Aufgabe zugrunde, einen Aktuator der eingangs genannten Art derart weiterzubilden, dass insbesondere der Rotor und der Hohlkörper einen vergleichsweise einfachen, und damit kostengünstig herstellbaren Aufbau aufweisen.

Diese Aufgabe wird gelöst durch einen Aktuator mit den Merkmalen des Patentanspruchs 1. Folglich ist insbesondere vorgesehen, dass der Rotor parallel oder schräg zur Drehachse verlaufende Rotorsegmente aufweist, wobei benachbart angeordnete Rotorsegmente unterschiedlich magnetisch polarisiert sind, und wobei die einzelnen Rotorsegmente auf der dem Hohlkörper zugewandten Oberseite erhabene, mit dem Hohlkörper zusammenwirkende Wirkabschnitte aufweisen. Ferner ist vorgesehen, dass der Hohlkörper parallel oder schräg zur Drehachse verlaufende Hohlkörpersegmente aufweist, wobei benachbart angeordnete Hohlkörpersegmente unterschiedlich magnetisch polarisiert sind, und wobei die Hohlkörpersegmente auf der dem Rotor zugewandten Innenseite erhabene, mit den Wirkabschnitten zusammenwirkende Gegenabschnitte derart aufweisen, dass sich der Rotor bei Drehung um die Drehachse bewegt.

Durch Vorsehen der Rotorsegmente und der Hohlkörpersegmente, die in Umfangsrichtung jeweils abwechselnd magnetisch polarisiert benachbart angeordnet sind, und durch Vorsehen entsprechend ausgebildeter Wirkabschnitte und Gegenabschnitt kann auf vergleichsweise einfache Art und Weise erreicht werden, dass der Rotor bei Drehung entlang der Helix bewegt wird. Anders als beim bekannten Stand der Technik ist nicht eine Vielzahl von einzelnen Magneten in den Rotor bzw. den Hohlkörper einzusetzen; es sind lediglich unterschiedlich magnetisch polarisierte, die Wirkabschnitte und Gegenabschnitte aufweisende Rotorsegmente und Hohlkörpersegmente vorzusehen. Dabei sind die Wirkabschnitte und die Gegenabschnitte jeweils entlang einer um die Drehachse verlaufenden Helix angeordnet. Der Rotor ist dabei mit einem Stellglied derart bewegungskoppelbar, dass bei Drehung des Rotors entlang der Helix das Stellglied translatorisch verfahren wird.

Zur entsprechenden magnetischen Polarisierung der Rotorsegmente und der Hohlkörpersegmente ist vorteilhaft, wenn zwischen zwei benachbart angeordneten Rotorsegmenten bzw. wenn zwischen zwei benachbart angeordneten Hohlkörpersegmenten jeweils eine permanent magnetisierte Magnetleiste vorgesehen ist. Vorzugsweise sind die Magnetleisten derart angeordnet, dass sie mit der gleichen Polarisierung jeweils ein Segment einfassen. Zwischen zwei Nordpolen zweier Magnetleisten ist folglich ein Segment vorgesehen, dass dann als Nordpol polarisiert ist. Zwischen zwei Südpolen zweier Magnetleisten ist dann ein Segment angeordnet, dass ebenfalls als Südpol magnetisiert ist. Dadurch kann gewährleistet werden, dass die einzelnen, jeweils benachbarten Segmente eine unterschiedliche Polarisierung vorsehen.

Zur Bildung der Helix ist vorteilhaft, wenn die Wirkabschnitte und die Gegenabschnitte jeweils in deren Draufsicht, also in Ansicht senkrecht zur Rotationsachse, geneigt zur Rotationsachse verlaufen, so dass benachbarte Wirkabschnitte gleicher Polarisierung und benachbarte Gegenabschnitt gleicher Polarisierung auf je einer um die Drehachse verlaufenden Helix liegen.

Allerdings ist auch denkbar, dass die Wirkabschnitte und die Gegenabschnitte jeweils in deren Draufsicht, also in Ansicht senkrecht zur Rotationsachse, quer zur Rotationsachse verlaufen. Die Wirkabschnitte und die Gegenabschnitte können dabei so angeordnet sein, dass die mittleren Bereiche, und insbesondere deren Mittelpunkte in deren jeweiligen Draufsicht, von benachbarten, gleich polarisierten Wirkabschnitten bzw. Gegenabschnitten auf der je einer um die Drehachse verlaufenden Helix liegen.

Ferner ist vorteilhaft, wenn in Richtung der Drehachse benachbart angeordnete Wirkabschnitte und Gegenabschnitte jeweils einen Abstand a zueinander aufweisen. Je nach gewünschter Steigung der Helix können die Abschnitte a unterschiedlich groß sein. Denkbar ist auch, dass die Abstände a im Wesentlichen der in Richtung der Drehachse verlaufenden Breite b der Wirkabschnitte entsprechen.

Eine weitere vorteilhafte Ausführungsform ergibt sich dann, wenn die Wirkabschnitte bzw. die Gegenabschnitte auf einem Rotorsegment bzw. Hohlkörpersegment zu Wirkabschnitten bzw. Gegenabschnitten auf einem benachbart angeordneten Rotorsegment bzw. Hohlkörpersegment in Umfangsrichtung einen Abstand c aufweisen. Der Abstand c kann dabei insbesondere der in Umfangsrichtung gemessenen Tiefe der zwischen den jeweiligen Abschnitten liegenden Magnetleisten entsprechen. Der Abstand c kann dabei im Wesentlichen dem Abstand a und/oder der Breite b entsprechen.

Ferner hat sich als vorteilhaft herausgestellt, wenn die Wirkabschnitt und/oder die Gegenabschnitte im Querschnitt T-förmig ausgebildet sind. Der Querschnitt entspricht dabei einer Ansicht entlang der Umfangsrichtung.

Eine weitere vorteilhafte Ausgestaltung der Erfindung ergibt sich dann, wenn die Wirkabschnitte von gleich magnetisch polarisierten Rotorsegmenten bzw. die Gegenabschnitte von gleich magnetisch polarisierten Hohlkörpersegmenten jeweils eine Aufnahme für einen Leitkörper derart aufweisen, dass der Leitkörper entlang einer um die Rotorachse verlaufenden Helix verläuft. Dadurch wird erreicht, dass die entlang der Helix verlaufenden Wirkabschnitte bzw. Gegenabschnitte durch den Leitkörper miteinander verbunden werden. Dadurch kann eine Polarisierung des Leitkörpers entlang der Helix realisiert werden.

Dabei ist vorteilhaft, wenn die Wirkabschnitte von anders magnetisch polarisierten Rotorsegmenten bzw. die Gegenabschnitte von anders magnetisch polarisierten Hohlkörpersegmenten eine Ausnehmung derart aufweisen, dass der an den gleich magnetisch polarisierten Wirkabschnitten bzw. Gegenabschnitten angeordnete Leitkörper nicht mit den die Ausnehmungen aufweisenden Wirkabschnitten bzw. Gegenabschnitte in Berührkontakt kommt. Hierdurch kann erreicht werden, dass der Leitkörper, der beispielsweise als Südpol polarisiert ist, nicht in Berührkontakt mit den Wirkabschnitten oder Gegenabschnitten kommt, die als Nordpol polarisiert sind. Anders herum kann erreicht werden, dass ein Leitkörper, der als Nordpol polarisiert ist, nicht mit Wirkabschnitten oder Gegenabschnitten in Berührkontakt kommt, die als Südpol polarisiert sind. Insgesamt können hierdurch vorteilhafterweise Leitkörper bereitgestellt werden, die ausschließlich eine Nordpolpolarisierung und/oder ausschließlich eine Südpolpolarisierung aufweisen. Ferner ist denkbar, dass zwei parallel zueinander, entlang jeweils einer um die Drehachse verlaufenden Helix angeordnete Leitkörper vorgesehen sind, wobei die beiden Leitkörper dann unterschiedlich magnetisch polarisiert sind. Dadurch kann erreicht werden, dass der Rotor bei Rotation sehr stabil entlang der Helixbahn bewegt wird.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert sind.

Es zeigen:
- Figur 1: das Primärteil, den Rotor und den Hohlkörper eines erfindungsgemäßen Aktuators in Explosionsdarstellung;
- Figur 2: den Rotor des Aktuators gemäß Figur 1 als Einzeldarstellung;
- Figur 3: einen vergrößerten Ausschnitt des Rotors gemäß Figur 2;
- Figur 4: den Hohlkörper des Aktuators gemäß Figur 1;
- Figur 5: einen vergrößerten Ausschnitt des Hohlkörpers gemäß Figur 4;
- Figur 6: einen alternativen Rotor des Aktuators gemäß Figur 1;
- Figur 7: einen vergrößerten Ausschnitt des Rotors gemäß Figur 6.

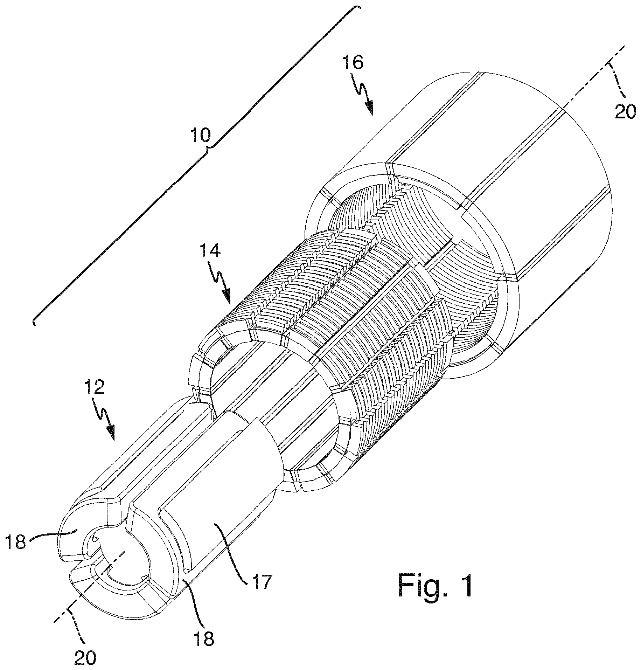

In der Figur 1 ist ein Aktuator 10 gezeigt, der ein Primärteil 12, einen Rotor 14 und einen Hohlkörper 16 umfasst. Das Primärteil 12 weist dabei beispielsweise einen geblechten Grundkörper 17 und bestrombare Primärteilwicklungen 18 auf, mit denen Erregermagnetfelder erzeugt werden können. Im montiertem Zustand umgibt der Rotor 14 das Primärteil 12 in radialer Richtung und ist um eine Drehachse 20 drehbar gelagert angeordnet. Ferner umgibt im montierten Zustand der Hohlkörper 16 den Rotor 14 in radialer Richtung. Der Hohlkörper 16 ist dabei, ebenso wie das Primärteil 12, drehfest angeordnet. Der Rotor 14 ist zwischen dem Primärteil 12 und dem Hohlkörper 16 drehbar angeordnet. Der Rotor 14 ist derart drehbar angeordnet, dass er bei Drehung entlang einer um die Drehachse 20 verlaufenden Helix bewegt wird. Die Helixbewegung des Rotors 14 wird durch eine entsprechende magnetische Kopplung des Rotors 14 mit dem Hohlkörper 16 erreicht; der Rotor 14 wird folglich aufgrund der magnetischen Kopplung entlang der Helix zwangsgeführt.

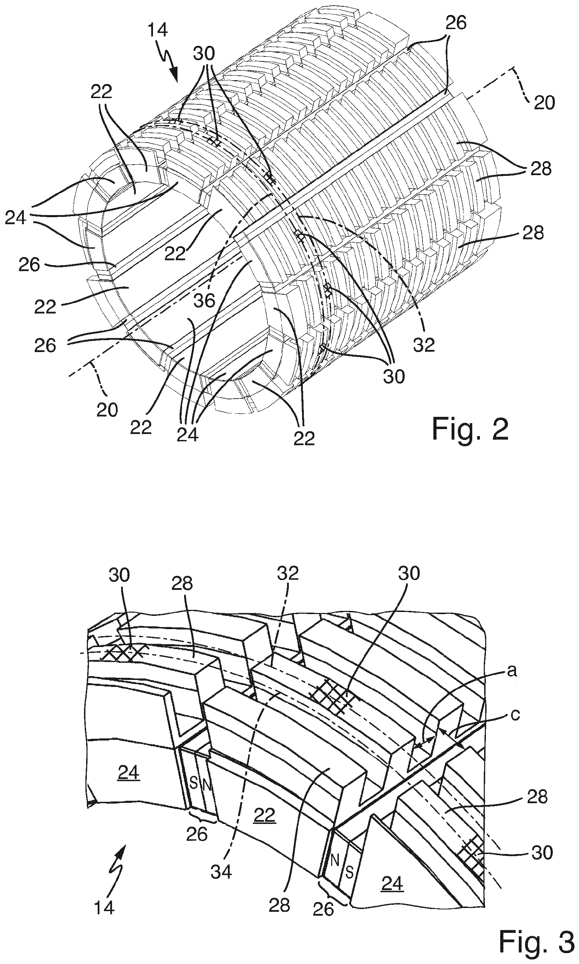

Wie aus den Figuren 2 und 3 deutlich wird, weist der Rotor 14 parallel zur Drehachse 20 verlaufende Rotorsegmente 22 und 24 auf. Bei einer anderen Ausführungsform ist denkbar, dass die Rotorsegmente schräg zur Drehachse 20 verlaufend angeordnet sind, und mit dieser einen spitzen Winkel einschließen. Die Rotorsegmente 22 sind derart magnetisch polarisiert, dass sie einen Nordpol ausbilden; die Rotorsegmente 24 sind derart magnetisch polarisiert, dass sie einen Südpol ausbilden. Wie der Figur 2 entnommen werden kann, sind insgesamt sieben Rotorsegmente 22 und sieben Rotorsegmente 24 vorgesehen. Zwischen jeweils zwei benachbarten Rotorsegmenten 22 und 24 ist eine parallel zur Drehachse 20 verlaufend angeordnete, permanentmagnetisierte Magnetleiste 26 vorgesehen. Zwischen den insgesamt vierzehn Rotorsegmenten 22, 24 sind folglich insgesamt 14 Magnetleisten 26 angeordnet.

Wie aus der Vergrößerung gemäß Figur 3 hervorgeht, bildet jede Magnetleiste 26 jeweils sich parallel zur Drehachse 20 erstreckend, einen Nordpol N und einen Südpol S aus. Zwischen zwei einander zugewandten Nord-Polarisierungen zweier Magnetleisten 26 ist jeweils ein Rotorsegment 22 vorhanden, welches ebenfalls eine Nord-Polarisierung vorsieht. Zwischen zwei einander zugewandten Südpolen S zweier Magnetleisten 26 ist jeweils ein Rotorsegment 24 mit einer Süd-Polarisierung vorgesehen. Durch die beschriebene Anordnung kann gewährleistet werden, dass sämtliche Rotorsegmente 22 und 24 über ihre gesamte Längserstreckung eine vorgesehene Nord-Polarisierung bzw. Süd-Polarisierung erfahren.

Wie ebenfalls aus den Figuren 2 und 3 deutlich wird, weisen die Rotorsegmente 22, 24 auf der dem Hohlkörper 16 zugewandten Oberseite erhabene Wirkabschnitte 28 auf. In Richtung der Drehachse 20 hintereinanderliegende Wirkabschnitte 28 gehören dem jeweiligen gleichen Rotorsegment 22 oder 24 an und weisen deshalb eine gleiche Polarisierung auf. Die einzelnen Wirkabschnitte 28 sind als quer zur Drehachse 20 verlaufende Stegabschnitte ausgebildet. Die mittleren Bereiche 30 der Wirkabschnitte 28 der Rotorsegmenten 22, die eine Nord-Polarisierung aufweisen, liegen auf einer um die Drehachse 20 verlaufenden Helix, die in der Figur 2 mit dem Bezugszeichen 32 angedeutet ist. Ebenso liegen die mittleren Bereiche 34 der Wirkabschnitte 28 der Rotorsegmenten 24, die eine Süd-Polarisierung aufweisen, auf einer Helix, die mit dem Bezugszeichen 36 angedeutet ist. Wie insbesondere aus der Vergrößerung gemäß Figur 3 deutlich wird, liegt die Nordpol-Helix 32 in den Bereichen der Rotorsegmente 24 zwischen jeweils zwei Süd-polarisierten Wirkabschnitten 28. Anders herum liegt die Südpol-Helix 34, die von den Rotorsegmenten 24 mit einer Süd-Polarisierung gebildet werden, zwischen zwei Wirkabschnitte 28 der Rotorsegmente 22, die die Nord-Polarisierung aufweisen.

Durch die beschriebene Anordnung werden folglich zwei parallel zueinander verlaufende, unterschiedlich polarisierte Helix-Bahnen 32, 34 um die Drehachse 20 gebildet. Die Helix-Bahnen bilden dabei eine Art "Gewinde", entlang derer sich der Rotor 14 bei Verdrehung des Rotors 14 bezüglich des Primärteils 12 und des Hohlkörpers 16 bewegt.

Wie ebenfalls insbesondere aus Figur 3 deutlich wird, weisen die einzelnen Wirkabschnitte 28 in Richtung der Drehachse einen Abstand a zueinander auf. In Umfangsrichtung gesehen weisen benachbarte Wirkabschnitte 28 einen Abstand c zueinander auf. Der Abstand c entspricht dabei der in Umfangsrichtung gesehenen Tiefe der jeweiligen Magnetleiste 26.

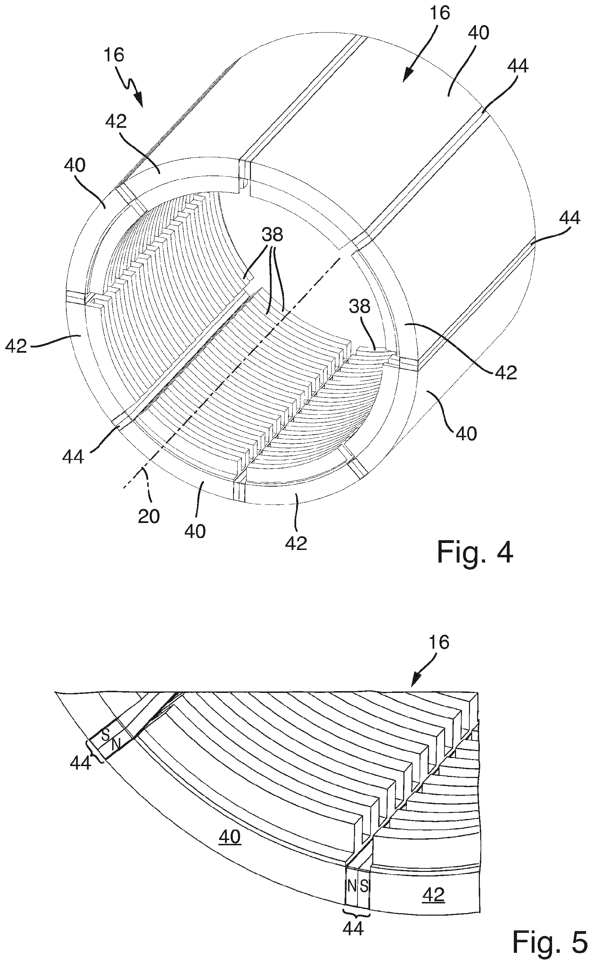

Der in der Figur 4 dargestellte Hohlkörper 16 weist einen Aufbau auf, der im Wesentlichen dem Rotor 14 entspricht, wobei der Hohlkörper 16 mit den Wirkabschnitten 28 des Rotors 14 zusammenwirkende Gegenabschnitte 38 aufweist. Der Hohlkörper 16 weist parallel zur Drehachse verlaufende Hohlkörpersegmente 40, 42 auf. Die Hohlkörpersegmente 40 weisen dabei eine Nord-Polarisierung auf und die Hohlkörpersegmente 42 eine Süd-Polarisierung. Insgesamt sind acht Hohlkörpersegmente 40, 42 vorgesehen. Zwischen jeweils zwei benachbarten Hohlkörpersegmenten 40, 42 ist jeweils eine Magnetleiste 44 vorgesehen, die jeweils einen Nordpol und einen Südpol aufweist. Die Anordnung ist dabei entsprechend dem Rotor 14 und den Magnetleisten 26; zwei einander zugewandte Nordpole zweier Magnetleisten 44 schließen einen Hohlkörperabschnitt 40 ein, so dass dieser eine Nord-Polarisierung erhält. Zwei einander zugewandte Süd-Abschnitte der Magnetleisten 44 schließen ein Hohlkörpersegment 42 ein, so dass dieses eine Süd-Polarisierung erfährt.

Die Gegenabschnitte 38 sind als nach radial innen gerichtete Stegabschnitte ausgebildet. Die Gegenabschnitte 38 sind dabei derart versetzt zueinander, dass Gegenabschnitte 38 gleich magnetisch polarisierter Hohlkörpersegmente 40, 42 jeweils eine um die Drehachse verlaufende Helix definieren. Die vom Hohlkörper 16, bzw. dessen Gegenabschnitte 38 erzeugte Helices wirken mit den vom Rotor 14 bzw. dessen Wirkabschnitte 28 erzeugten Helices so zusammen, dass der Rotor bei Drehung entlang einer Helix-Bahn geführt wird. Die Helices des Rotors 14 bilden dabei eine Art "Außengewinde" und die Helices des Hohlkörpers eine Art "Innengewinde", so dass der Rotor 14 bei Drehung entlang einer Schraubenlinie geführt wird.

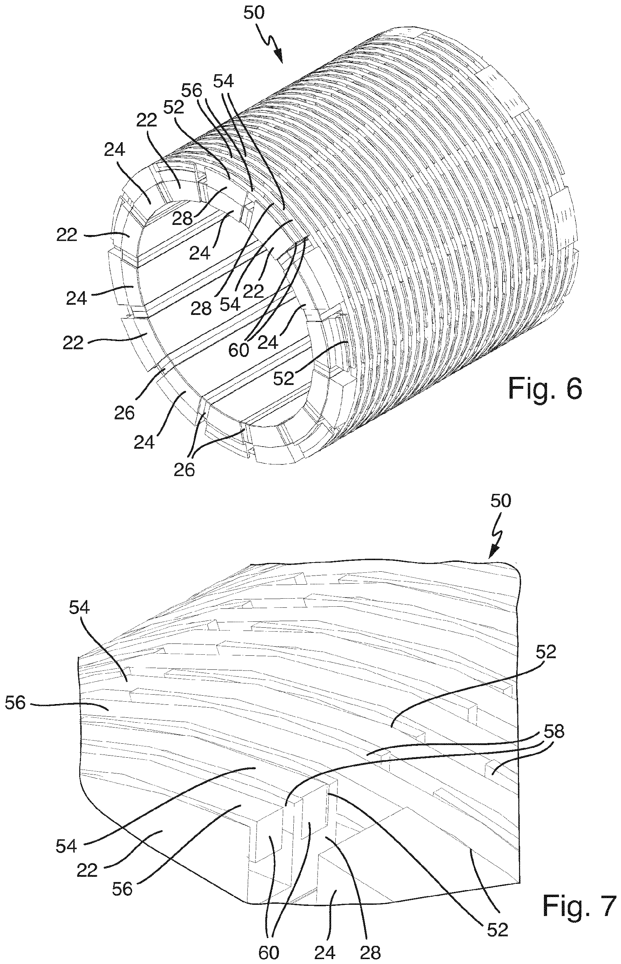

In den Figuren 6 und 7 ist eine alternative Ausführungsform eines Rotors 50 gezeigt, der entsprechend dem Rotor 14 Rotorsegmente 22 und 24 sowie Magnetleisten 26 vorsieht. An den Rotorsegmenten 22 und 24 sind, entsprechend dem Rotor 14, auch Wirkabschnitte 28 angeordnet. Im Unterschied zum Rotor 14 weisen die Wirkabschnitte 28 von gleich magnetisch polarisierten Rotorsegmenten 22, 24 beim Rotor 50 jeweils eine Aufnahme 52 für je einen Leitkörper 54, 56 auf. Die Leitkörper 54, 56 sind dabei drahtartig ausgebildet und verläuft entlang einer um die Drehachse 20 verlaufenden Helix. Insgesamt sind zwei Leitkörper 54 und 56 vorgesehen, wobei der Leitkörper 54 in den Aufnahmen 52 angeordnet ist, die an den Rotorsegmenten 22, die als Nordpole polarisiert sind, angeordnet sind. Der Leitkörper 56 ist in den Aufnahmen 52 von den Rotorsegmenten 24, die eine Süd-Polarisierung aufweisen, angeordnet. Der Leitkörper 54, der mit den einen Nord-Polarisierung aufweisenden Wirkabschnitten 28 zusammenwirkt, verläuft im Bereich der anders magnetisch polarisierten Rotorsegmente 22 jeweils zwischen zwei Wirkabschnitten 24, so dass er nicht mit diesen Wirkabschnitten 28 in Berührkontakt kommt. Entsprechend verläuft der Leitkörper 56, der an den Wirkabschnitte 28 der Rotorsegmente 24, die eine Süd-Polarisierung aufweisen, angeordnet ist, in den Bereichen der Nord-polarisierten Rotorsegmente 22 jeweils berührungslos (Beabstandung 58) zwischen zwei dortigen Wirkabschnitten 28. Die jeweiligen Aufnahmen 52 sowie die jeweiligen Leitkörper 54 und 56 sind im Ausschnitt gemäß Figur 7 deutlich zu erkennen. Dort sind jeweils auch die freien Enden 60 der beiden Leitkörper 54 und 56 gezeigt.

Durch Vorsehen der umlaufenden, unterschiedlich magnetisch polarisierten Leitkörper 54, 56 kann folglich die magnetische Bewegungskopplung zwischen dem Rotor 50 und dem Hohlkörper 16 verbessert werden.

## Patentansprüche

1. Aktuator (10) mit einem Primärteil (12), das bestrombare Primärteilwicklungen (18) aufweist, mit einem das Primärteil (12) in radialer Richtung umgebenden und um eine Drehachse (20) drehbar angeordneten Rotor (14, 50) und mit einem den Rotor (14, 50) in radialer Richtung umgebenden Hohlkörper (16), wobei der Rotor (14, 50) und der Hohlkörper (16) derart magnetisch miteinander gekoppelt sind, dass sich der Rotor (14, 50) bei Drehung entlang einer um die Drehachse (20) verlaufenden Helix (30, 34) bewegt und wobei der Rotor (14, 50) mit einem Stellglied derart bewegungskoppelbar ist, dass bei der Drehung um die Helix (30, 34) das Stellglied translatorisch verfahren wird,
**dadurch gekennzeichnet,**
**dass** der Rotor (14, 50) parallel oder schräg zur Drehachse (20) verlaufende, einstückig ausgebildete, eine einheitliche magnetische Polarisierung aufweisende und entlang des Umfangs nebeneinander angeordnete Rotorsegmente (22, 24) aufweist, wobei benachbart angeordnete Rotorsegmente (22, 24) unterschiedlich magnetisch polarisiert sind, und wobei die einzelnen Rotorsegmente (22, 24) auf der dem Hohlkörper (16) zugewandten Oberseite jeweils mehrere erhabene, mit dem Hohlkörper (16) zusammenwirkende Wirkabschnitte (28) aufweisen,
**dass** der Hohlkörper (16) parallel oder schräg zur Drehachse (20) verlaufende und entlang des Umfangs nebeneinander angeordnete Hohlkörpersegmente (40, 42) aufweist, wobei benachbart angeordnete Hohlkörpersegmente (40, 42) unterschiedlich magnetisch polarisiert sind, und wobei die Hohlkörpersegmente (40, 42) auf der dem Rotor (14, 50) zugewandten Innenseite jeweils mehrere erhabene, mit den Wirkabschnitten (28) zusammenwirkende Gegenabschnitte (38) aufweisen, und
**dass** die Wirkabschnitte (28), die gleich magnetisch polarisiert sind, und die Gegenabschnitte (38), die gleich magnetisch polarisiert sind, jeweils entlang einer um die Drehachse (20) verlaufenden Helix (32, 34) angeordnet sind.

2. Aktuator (10) nach Anspruch 1, **dadurch gekennzeichnet, dass** zwischen zwei benachbart angeordneten Rotorsegmenten (22, 24) und/oder dass zwischen zwei benachbart angeordneten Hohlkörpersegmenten (40, 42) jeweils eine permanent magnetisierte Magnetleiste (26, 44) vorgesehen ist.

3. Aktuator (10) nach Anspruch 1 oder 2, **dadurch gekennzeichnet, dass** die Wirkabschnitte (28) und/oder die Gegenabschnitte (38) jeweils in deren Draufsicht geneigt zur Drehachse (20) verlaufen, so dass in Umfangsrichtung benachbarter, die gleiche Polarisierung aufweisender Wirkabschnitte (28) und/oder Gegenabschnitte (38) jeweils auf einer um die Drehachse verlaufenden Helix (32, 34) liegen.

4. Aktuator (10) nach einem der vorhergehenden Ansprüche, **dadurch gekennzeichnet, dass** die Wirkabschnitte (28) und/oder die Gegenabschnitte (38) jeweils in deren Draufsicht quer zur Drehachse (20) verlaufen, und dass zumindest die mittleren Bereiche (30) in Umfangsrichtung benachbarter, die gleiche Polarisierung aufweisender Wirkabschnitte (28) und/oder Gegenabschnitte (38) jeweils auf einer um die Drehachse (20) verlaufenden Helix (32, 34) liegen.

5. Aktuator (10) nach einem der vorhergehenden Ansprüche, **dadurch gekennzeichnet, dass** in Richtung der Drehachse (20) benachbart angeordnete Wirkabschnitte (28) und/oder Gegenabschnitte (38) jeweils zueinander einen Abstand a aufweisen.

6. Aktuator (10) nach einem der vorhergehenden Ansprüche, **dadurch gekennzeichnet, dass** in Umfangsrichtung benachbarte Wirkabschnitte (28) und/oder Gegenabschnitte (38) jeweils zueinander einen Abstand c aufweisen.

7. Aktuator (10) nach einem der vorhergehenden Ansprüche, **dadurch gekennzeichnet, dass** die Wirkabschnitte (28) von gleich magnetisch polarisierten Rotorsegmenten (22, 24) und/oder die Gegenabschnitte (38) von gleich magnetisch polarisierten Hohlkörpersegmenten (40, 42) jeweils eine Aufnahme (52) und jeweils einen in der jeweiligen Aufnahme (52) vorgesehenen Leitkörper (54, 56) derart aufweisen, dass die Leitkörper (54, 56) jeweils entlang einer um die Drehachse verlaufenden Helix verlaufen.

8. Aktuator (10) nach Anspruch 7, **dadurch gekennzeichnet, dass** die Wirkabschnitte (28) von gleich magnetisch polarisierten Rotorsegmenten (22, 24) bzw. die Gegenabschnitte (38) von gleich magnetisch polarisierten Hohlkörpersegmenten (40, 42) derart angeordnet sind, dass der Leitkörper (54, 56) der anders magnetisch polarisierten Wirkabschnitten (28) bzw. der anders magnetisch polarisierten Gegenabschnitten (38) nicht mit diesen Wirkabschnitten (28) bzw. Gegenabschnitten (38) in Berührkontakt kommt.

9. Aktuator (10) nach Anspruch 7 oder 8, **dadurch gekennzeichnet, dass** wenigstens zwei parallel zueinander, entlang jeweils einer um die Drehachse (20) verlaufenden Helix angeordnete Leitkörper (54, 56) vorgesehen sind, die unterschiedlich magnetisch polarisiert sind.

## Claims

1. An actuator (10) comprising a primary part (12) having primary part windings (18) adapted to be energized, having the
primary part (12) in the radial direction and arranged rotatably around an axis of rotation (20), and having a hollow body (16) surrounding the rotor (14, 50) in the radial direction, wherein the rotor (14, 50) and the hollow body (16) are magnetically coupled to one another in such a manner that the rotor (14, 50) moves upon rotation along a helix (30, 34) extending around the axis of rotation (20), and wherein the rotor (14, 50) can be motion-coupled to an actuator in such a manner that upon rotation around the helix (30, 34) the actuator is translationally displaced,
**characterized in that** the rotor (14, 50) extending parallel or obliquely to the axis of rotation (20) is formed in a single piece and has a uniform magnetic polarization and
has rotor segments (22, 24) arranged adjacent to one another along the circumference, wherein adjacently arranged rotor segments (22, 24) are magnetically polarized differently, and wherein the individual rotor segments (22, 24) each have, on the upper side facing the hollow body (16), a plurality of raised active portions (28) which interact with the hollow body (16),
**that** the hollow body (16) has hollow body segments (40, 42) extending parallel or oblique to the axis of rotation (20) and arranged adjacent to one another along the circumference, wherein adjacently arranged hollow body segments (40, 42) are differently magnetically polarized, and wherein the hollow body segments (40, 42) each have on the inner side facing the rotor (14, 50) a plurality of raised counter portions (38) interacting with the active portions (28), and
**that** the active portions (28), which are equally magnetically polarized, and the counter portions (38), which are equally magnetically polarized, are each arranged along a helix (32, 34) extending around the axis of rotation (20).

2. The actuator (10) in accordance with claim 1, **characterized in that** a permanently magnetized magnetic strip (26, 44) is provided in each case between two adjacently arranged rotor segments (22, 24) and/or **in that** a permanently magnetized magnetic strip (26, 44) is provided between two adjacently arranged hollow body segments (40, 42).

3. The actuator (10) in accordance with claim 1 or 2, **characterized in that** the active portions (28) and/or the counter portions (38) each extend inclined to the axis of rotation (20) in their plan view, in such a manner that, in the circumferential direction, adjacent active portions (28) and/or counter portions (38) having the same polarization each rest on a helix (32, 34) extending around the axis of rotation.

4. The actuator (10) in accordance with any of the preceding claims, **characterized in that** the active portions (28) and/or the counter portions (38) each extend transversely to the axis of rotation (20) in their plan view, and **in that** at least the central areas (30) in the circumferential direction of adjacent active portions (28) and/or counter portions (38) having the same polarization each rest on a helix (32, 34) extending around the axis of rotation (20).

5. The actuator (10) in accordance with any of the preceding claims, **characterized in that** active portions (28) and/or counter portions (38) arranged adjacent to one another in the direction of the axis of rotation (20) are each at a distance a from one another.

6. The actuator (10) in accordance with any of the preceding claims, **characterized in that** active portions (28) and/or counter portions (38) adjacent to one another in the circumferential direction are each at a distance c from one another.

7. The actuator (10) in accordance with any of the preceding claims, **characterized in that** the active portions (28) of equally magnetically polarized rotor segments (22, 24) and/or the counter portions (38) of equally magnetically polarized hollow body segments (40, 42) each have a receptacle (52) and in each case a conductive body (54, 56) provided in the respective receptacle (52) in such a manner that the conductive bodies (54, 56) each extend along a helix extending around the axis of rotation.

8. The actuator (10) in accordance with claim 7, **characterized in that** the active portions (28) of equally magnetically polarized rotor segments (22, 24) or the counter portions (38) of equally magnetically polarized hollow body segments (40, 42) are arranged in such a manner that the conductive body (54, 56) of the differently magnetically polarized active portions (28) or the differently magnetically polarized counter portions (38) does not come into contact with these active portions (28) or counter portions (38).

9. The actuator (10) in accordance with claim 7 or 8, **characterized in that** at least two conductive bodies (54, 56) are provided which are arranged parallel to one another, along a respective helix extending around the axis of rotation (20), and which are magnetically polarized differently.

## Revendications

1. Actionneur (10) avec une partie primaire (12), qui présente des enroulements de partie primaire (18) pouvant être alimentées en courant, avec un rotor (14, 50) entourant la partie primaire (12) dans la direction radiale et disposé de manière à pouvoir tourner autour d'un axe de rotation (20) et avec un corps creux (16) entourant le rotor (14, 50) dans la direction radiale, dans lequel le rotor (14, 50) et le corps creux (16) sont accouplés l'un à l'autre magnétiquement de telle sorte que le rotor (14, 50) lors de la rotation se déplace le long d'une hélice (30, 34) s'étendant autour de l'axe de rotation (20) et dans lequel le rotor (14, 50) peut être accouplé en mouvement à un organe de réglage, de telle sorte que lors de la rotation autour de l'hélice (30, 34) l'organe de réglage est déplacé en translation,
**caractérisé en ce**
**que** le rotor (14, 50) présente des segments de rotor (22, 24) s'étendant parallèlement ou de manière oblique par rapport à l'axe de rotation (20), réalisés d'une seule pièce, présentant une polarisation magnétique uniforme et disposés les uns à côté des autres le long de la circonférence, dans lequel les segments de rotor (22, 24) disposés de manière voisine sont polarisés magnétiquement de manière différente, et dans lequel les segments de rotor (22, 24) individuels présentent sur la face supérieure tournée vers le corps creux (16) respectivement plusieurs parties actives (28) saillantes, coopérant avec le corps creux (16),
**que** le corps creux (16) présente des segments de corps creux (40, 42) s'étendant parallèlement ou de manière oblique par rapport à l'axe de rotation (20) et disposés les uns à côté des autres le long de la circonférence, dans lequel les segments de corps creux (40, 42) disposés de manière voisine sont polarisés magnétiquement de manière différente, et dans lequel les segments de corps creux (40, 42) présentent sur la face intérieure tournée vers le rotor (14, 50) respectivement plusieurs contre-parties (38) saillantes, coopérant avec les parties actives (28), et
**que** les parties actives (28), qui sont polarisées magnétiquement de manière identique, et les contre-parties (38), qui sont polarisées magnétiquement de manière identique, sont disposées respectivement le long d'une hélice (32, 34) s'étendant autour de l'axe de rotation (20).

2. Actionneur (10) selon la revendication 1, **caractérisé en ce que** respectivement une baguette magnétique (26, 44) à magnétisation permanente est prévue entre deux segments de rotor (22, 24) disposés de manière voisine et/ou entre deux segments de corps creux (40, 42) disposés de manière voisine.

3. Actionneur (10) selon la revendication 1 ou 2, **caractérisé en ce que** les parties actives (28) et/ou les contre-parties (38) s'étendent respectivement dans leur vue en élévation de manière inclinée par rapport à l'axe de rotation (20), de sorte que des parties actives (28) et/ou contre-parties (38) voisines dans la direction circonférentielle, présentant la même polarisation se situent respectivement sur une hélice (32, 34) s'étendant autour de l'axe de rotation (20) .

4. Actionneur (10) selon l'une quelconque des revendications précédentes, **caractérisé en ce que** les parties actives (28) et/ou les contre-parties (38) s'étendent respectivement dans leur vue en élévation transversalement par rapport à l'axe de rotation (20), et qu'au moins les zones centrales (30) de parties actives (28) et/ou contre-parties (38) voisines dans la direction circonférentielle, présentant la même polarisation, se situent respectivement sur une hélice (32, 34) s'étendant autour de l'axe de rotation (20).

5. Actionneur (10) selon l'une quelconque des revendications précédentes, **caractérisé en ce que** des parties actives (28) et/ou contre-parties (38) disposées de manière voisine en direction de l'axe de rotation (20) présentent respectivement les unes par rapport aux autres un écart a.

6. Actionneur (10) selon l'une quelconque des revendications précédentes, **caractérisé en ce que** des parties actives (28) et/ou contre-parties (38) voisines dans la direction circonférentielle présentent respectivement les unes par rapport aux autres un écart c.

7. Actionneur (10) selon l'une quelconque des revendications précédentes, **caractérisé en ce que** les parties actives (28) de segments de rotor (22, 24) polarisés magnétiquement de manière identique et/ou les contre-parties (38) de segments de corps creux (40, 42) polarisés magnétiquement de manière identique présentent respectivement un logement (52) et respectivement un corps de guidage (54, 56) prévu dans le logement (52) respectif, de telle sorte que les corps de guidage (54, 56) s'étendent respectivement le long d'une hélice s'étendant autour de l'axe de rotation.

8. Actionneur (10) selon la revendication 7, **caractérisé en ce que** les parties actives (28) de segments de rotor (22, 24) polarisés magnétiquement de manière identique ou les contre-parties (38) de segments de corps creux (40, 42) polarisés magnétiquement de manière identique sont disposées de telle sorte que le corps de guidage (54, 56) des parties actives (28) polarisées magnétiquement de manière différente ou des contre-parties (38) polarisées magnétiquement de manière différente ne vient pas en contact avec ces parties actives (28) ou contre-parties (38).

9. Actionneur (10) selon la revendication 7 ou 8, **caractérisé en ce qu'**au moins deux corps de guidage (54, 56) disposés parallèlement l'un à l'autre, le long de respectivement une hélice s'étendant autour de l'axe de rotation (20) sont prévus, qui sont polarisés magnétiquement de manière différente.
